(19)

Europäisches Patentamt
European Patent Office
Office européen des brevets

(11) **EP 1 959 441 A1**

(12) **EUROPEAN PATENT APPLICATION**

(43) Date of publication:
**20.08.2008 Bulletin 2008/34**

(51) Int Cl.:
**G11B 7/135** $^{(2006.01)}$     **G11B 7/16** $^{(2006.01)}$
**G11B 7/00** $^{(2006.01)}$     **G11B 7/09** $^{(2006.01)}$

(21) Application number: **07123568.3**

(22) Date of filing: **19.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **16.02.2007 KR 20070016856**

(71) Applicant: **Samsung Electronics Co., Ltd.**
**Suwon-si,**
**Gyeonggi-do 442-742 (KR)**

(72) Inventor: **Kim, Bong Gi**
**707,Mangpo-dong,Yeongtong-gu,Suwon-si**
**Gyeonggi-do (KR)**

(74) Representative: **Walaski, Jan Filip et al**
**Venner Shipley LLP**
**20 Little Britain**
**London EC1A 7DH (GB)**

(54)     **Optical pick-up with stray-light filtering element**

(57)     An optical pick-up and a disc apparatus having the same to overcome an inferiority of a tracking signal caused by an adjacent layer (L0,L1) during the recording and/or reproducing of data an optical disc (10) with multiple recording layers (L0,L1) are provided, the optical pick-up including: a light source (20) to emit a light with a predetermined wavelength corresponding to a type of the optical disc (10); a light collecting unit (30) to focus the emitted light to form a light spot on a signal recording layer (L1,L0) of the optical disc (10), wherein the signal recording layer (L1,L0) reflects the light as a signal light (L00,L11) and an adjacent layer (L0,L1) of the optical disc (10) reflects the light as a noise light (L01,L10); a photodetector (40) to detect a signal by receiving the signal light (L00,L11); and an optical member (50) to intercept the noise light (L01,L10) in order to decrease an intensity of the noise light (L01,L10) entering the photodetector (40). The optical member (50) comprises a plate made of glass and/or plastic that increases the size of the noise light (L01,L10) on the photodetector (40) to decrease the intensity of the noise light (L01,L10) on the photodetector (40), by generating aberration in the noise light (L01,L10).

Fig. 3

EP 1 959 441 A1

## Description

The present invention relates to an optical pick-up and a disc apparatus having the same, and more particularly, to an optical pick-up in which inferiority of a tracking signal caused by an adjacent layer during the recording and/or reproducing of an optical disc with multiple recording layers is effectively prevented, and a disc apparatus having the same.

With the continued evolution of image media and audio media, optical discs have been developed and commercialized to record and store high definition image information and high quality audio information for a long period of time.

Such an optical disc is a recording medium on which a large number of pits are formed on the surface thereof to change a reflection of a laser beam to record and/or reproduce information such as voice, images, documents, and the like. Conventional optical discs (such as a compact disc (CD), a digital versatile disc (DVD), etc.) are primarily used. However, due to the limited capacity of conventional discs, new optical discs (such as a recordable/rewritable Blu-ray disc (BD), an advance optical disc (AOD), etc.) capable of recording a vast quantity of information greater than a few tens of gigabytes have been developed and widely used.

The capacity of the information recorded in the optical disc is determined in inverse proportion to a size of a light spot focused on the surface of the optical disc. Furthermore, the size of the light spot S is determined by a wavelength $\lambda$ of a laser beam to be used and a numerical aperture NA of an objective lens according to the following Formula 1:

$$Formula\ 1$$

$$S \propto k\lambda / NA$$

where k is a constant dependent on an optical system and usually has a value between 1 and 2.

Thus, in order to record more information in the optical disc, the size of the light spot S focused on the optical disc must be decreased. Moreover, in order to decrease the size of the light spot S, as expressed by Formula 1, the wavelength $\lambda$ of the laser beam must be decreased and/or the numerical aperture NA must be increased.

In other words, as the capacity of the optical disc increases, a light source with a shorter wavelength and/or an objective lens with a higher numerical aperture must be used. For example, near infrared light with a wavelength of 780 nm and an objective lens with a numerical aperture 0.45 are used for compact discs, and red light with a wavelength of 650 nm (or 630 nm) and an objective lens with a numerical aperture of 0.6 (0.65 in a recordable type) are used for digital versatile discs.

However, in the Blu-ray optical disc, light with a short wavelength (405 nm to 408 nm) (i.e., a blue light) and an objective lens with a numerical aperture of 0.85 are used.

Recently, as the quantity of information to be recorded in the high density optical BD has increased, a multilayer optical disc having two or more layers formed on one side or both sides of the optical disc has been developed. In this multilayer optical disc, light returned to an optical detector during the recording and/or the reproducing of data on the optical disc is influenced by a layer positioned at a focal point of the objective lens (i.e., a layer on which the data is to be recorded and/or reproduced) as well as by adjacent layers. Thus, since a gap between the recording layers defined in the standard is determined such that the information in the optical disc does not influence an interlayer cross-talk, the interlayer cross-talk should not influence a servo-signal.

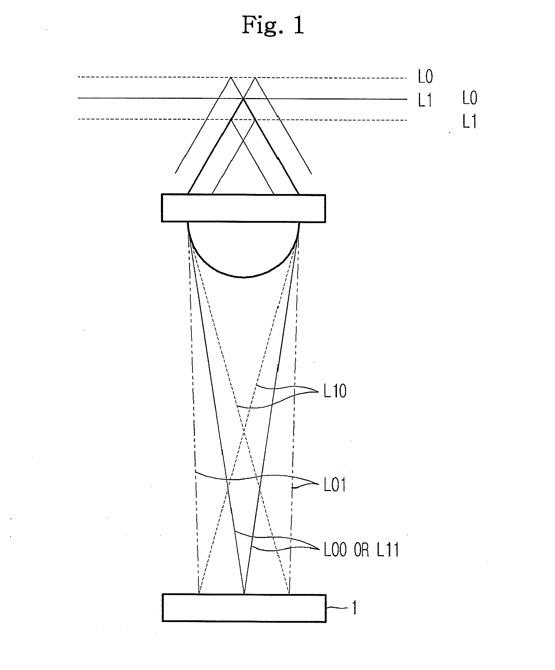

FIG. 1 is a schematic view illustrating a light path for the reproduction of the multilayer optical disc. Referring to FIG. 1, a focal point of light L10, reflected by a layer L0 (a layer adjacent to a layer to be reproduced, hereinafter referred to as an "adjacent layer"), is positioned in front of that of light L11 received by an optical detector 1 during the reproduction of a layer L1 (layer to be reproduced, hereinafter referred to as a "reproducing layer") closer to a light incident surface. On the contrary, a focal point of light L01 reflected by the adjacent layer L1 is positioned behind a focal point of light L00 received by the optical detector 1 during the reproduction of the layer L0 (adjacent layer) farther away from the light incident surface.

In the dual layer optical disc, in order to detect a tracking error signal, a differential push-pull (DPP) method is used. Generally, in the DPP method, the light is split into three lights (such as 0th order light (main light) and $\pm$ 1st order lights (sublight)) using a grating and intensity ratio of the split light (i.e., - 1st order light: 0th order light: + 1st order light is equal to or greater than 1: 10:1). This is because it is advantageous to use the 0th order light beam by increasing the intensity of the 0th light beam in view of use effect.

However, when, in the multilayer optical disc, the DPP method is used to detect the tracking error signal, the 0th order light reflected by the adjacent layer overlaps the $\pm$ 1st order lights reflected by the reproducing layer so that the tracking signal deteriorates. In other words, since the difference of light intensity between the 0th order light reflected by the reproducing layer and the 0th order light reflected by the adjacent layer is large, the 0th order light of the adjacent layer does not influence the data reproduction signal. However, since the difference of light intensity between the $\pm$ 1st order lights reflected by the reproducing layer and the 0th order light (main light) reflected by the adjacent layer is not relatively large, the 0th order light of the adjacent layer considerably effects a differential signal (sub-tracking signal) used to detect the tracking signal using the DPP method.

In order to solve this problem, Korean Patent Unexamined Application Publication No. 2005-0074839 proposes an optical pick-up in which the 0th order light (main light) reflected by the adjacent layer is restricted to improve the deterioration of the tracking signal due to the adjacent layer. The optical pick-up proposed in Korean Patent Unexamined Application Publication No. 2005-0074839 uses a polarized hologram to diffract the 0th order light reflected by the adjacent layer to regions other than a detector region in order to block the 0th order light reflected by the adjacent layer from entering a sub-photodetector. However, the polarized hologram blocks the 0th order light reflected by the adjacent layer from entering the sub-photodetector as well as the 0th order light (signal light) reflected by the focused reproducing layer (signal layer) from entering a main photodetector. Since a part of the $0^{th}$ order light reflected by the reproducing layer (about 10 %) is blocked by the polarized hologram from entering the main photodetector to detect a radio frequency (RF) signal, a magnitude of the RF signal to be detected is decreased and a signal characteristic deteriorates (i.e., the jitter characteristic deteriorates). Particularly, since the profile of the incident light into the photodetector is a Gaussian type and an architecture of the polarized hologram blocks a central area of the Gaussian profile, (i.e., a part where the intensity of a signal is the highest), the RF signal characteristic deteriorates even more.

If an area of the polarized hologram is decreased for the purpose of decreasing the deterioration of the RF signal characteristic, it is difficult to achieve the original purpose of restricting the 0th order light (noise light) reflected by the adjacent layer from entering the sub-photodetector. Furthermore, since the blocking area of the polarized hologram must be increased when light receiving magnification is small, the magnitude of the RF signal decreases more and the RF signal deteriorates more.

This problem is disclosed in the Korean Patent Unexamined Application Publication No. 2005-0074839 and proposes that sub-photodetectors are added to separately detect lights diffracted to areas separated from that of the photodetector and to compensate the deterioration of the signal characteristic. However, in this case, since signals used for the compensation (i.e., the optical signals), diffracted to the separated areas and separated from each other, contain signal coherent noise initially, it is not sufficient to help the proper compensation of the RF signal.

Thus, as a practical improvement for the deterioration of the RF signal characteristic, the polarized hologram may be minutely adjusted to find a point where the influence by the adjacent layers is minimized and an original signal from the reproducing layer is maximized. However, this improvement requires a greater number of components for the minute adjustment and increases manufacturing costs and manufacturing time.

Aspects of the present invention provide an optical pick-up in which deterioration of a tracking error signal due to an adjacent layer can be effectively prevented by increasing a size of light reflected by the adjacent layer during the recording and/or the reproducing of a multilayer optical disc, and a disc apparatus having the same.

Aspects of the present invention also provide an optical pick-up in which an optical member to generate astigmatism is provided between an objective lens and a collimating lens to block noise light reflected by an adjacent layer so that an interlayer signal coherent effect of a multilayer optical disc is effectively prevented and deterioration of an RF signal characteristic is more effectively improved, and a disc apparatus having the same.

According to an aspect of the present invention, there is provided an optical pick-up to record and/or reproduce data to/from an optical disc having a plurality of recording layers, the optical pick-up including: a light source to emit a light with a wavelength corresponding to a type of the optical disc; a light collecting unit to focus the light emitted from the light source to form a light spot on a target recording layer of the optical disc; a photodetector to receive a signal light reflected by the target recording layer and a noise light reflected by an adjacent recording layer, and to generate a signal from the signal light; and an optical member arranged to intercept the noise light without blocking the signal light so as to decrease an intensity of the noise light entering the photodetector.

The optical disc may be a Blu-ray disc, the light source may emit a light with a blue-violet laser having a wavelength satisfying the Blu-ray optical disc standard, and the light collecting unit may include an objective lens having a numerical aperture of about 0.85.

The optical pick-up may further include an optical path converter to guide the light emitted from the light source to the light collecting unit, and to guide the signal light to the photodetector, wherein the optical member may be provided between the optical path converter and the light collecting unit.

The optical path converter may include a collimating lens to collimate the light emitted from the light source, and the optical member may be provided between the collimating lens and the light collecting unit.

The optical member may include a plate made of glass and/or plastic to transmit the signal light, and to diffuse the noise light to be diverged and converged to generate an aberration, wherein the plate may have a thickness of between about 1 mm and 3 mm, and the plate may be inclined with respect to a line that runs perpendicular to a path of the signal light by about 40 degrees to 50 degrees. The optical pick-up may further include a grating to divide the light emitted from the light source into a 0th order light and $\pm$ 1st order lights to be projected onto the optical disc, such that the signal light includes a $0^{th}$ order signal light and $\pm$ 1st order signal lights and the noise light includes a $0^{th}$ order noise light, wherein: the photodetector may include a main photodetector to receive the 0th order signal light and a first sub-photodetector and a second sub-photodetector to respectively receive the ± 1st order signal lights; and the optical member increases a size of the 0th order noise light to decrease an intensity of the $0^{th}$ order noise light received by the first and second sub-photodetectors.

The optical member may increase a size of the noise light such that the intensity of the noise light is less than an intensity of the signal light. Moreover, the signal recording layer may be a layer on which the data is to be recorded and/or reproduced.

The photodetector may detect a tracking error signal from the signal light. The first sub-photodetector and the second sub-photodetector may detect a tracking error signal from the ± 1st order signal lights. The main photodetector may detect a data reproduction signal from the $0^{th}$ order signal light.

According to another aspect of the present invention, there is provided a disc apparatus including: an optical pick-up to record and/or reproduce data to/from a signal recording layer of an optical disc having a plurality of recording layers; a driving unit to drive the optical pick-up; and a controller to control a focus servo and a tracking servo of the optical pick-up, wherein the optical pick-up includes an optical member to intercept a noise light reflected by an adjacent layer, different from the signal recording layer, in order to decrease an intensity of the noise light.

The optical disc may be a Blu-ray optical disc.

The optical member may increase a size of the noise light reflected by the adjacent layer such that the intensity of the noise light is less than an intensity of a signal light reflected by the signal recording layer.

According to yet another aspect of the present invention, there is provided an optical pick-up to record and/or reproduce data to/from a signal recording layer of an optical disc having a plurality of recording layers, the optical pick-up inlcuding: a photodetector to detect a signal by receiving a signal light reflected by the signal recording layer; and an optical member to intercept a noise light reflected by an adjacent layer of the optical disc, different from the signal recording layer, in order to decrease an intensity of the noise light entering the photodetector, wherein the optical member does not block the signal light from being received by the photodetector.

According to still another aspect of the present invention, there is provided a method of detecting a signal from a signal recording layer of an optical disc having a plurality of recording layers, the method including: emitting a light with a wavelength corresponding to a type of the optical disc; focusing the emitted light on the signal recording layer of the optical disc, wherein the signal recording layer reflects the light as a signal light and an adjacent layer of the optical disc, different from the signal recording layer, reflects the light as a noise light; intercepting the noise light and decreasing an intensity of the intercepted noise light; receiving the noise light having the decreased intensity and the signal light; and detecting the signal from the received signal light without interference from the received noise light.

According to another aspect of the present invention, there is provided an optical member of an optical pick-up that records and/or reproduces data to/from a signal recording layer of an optical disc having a plurality of recording layers, wherein: the optical member intercepts a noise light reflected by an adjacent layer of the optical disc, different from the signal recording layer, in order to decrease an intensity of the noise light; the optical member does not block a signal light, reflected by the signal recording layer; and the optical pick-up detects a signal is from the signal light.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:

FIG. 1 is a schematic view illustrating a light path when a multilayer optical disc is reproduced;
FIG. 2 is a perspective view schematically illustrating an optical system of an optical pick-up according to an embodiment of the present invention;
FIG. 3 is a plan view illustrating an arrangement of the optical pick-up illustrated in FIG. 2;
FIG. 4 is a schematic view illustrating a photodetector employed in the optical pick-up according to an embodiment of the present invention;
FIG. 5 is an exemplary view illustrating a principle of an optical member employed in the optical pick-up according to an embodiment of the present invention;
FIGs. 6A and 6B are views illustrating distributions of light collected by the photodetector when light reflected by an adjacent layer diverges during the reproduction of an optical disc with the optical pick-up illustrated in FIG. 2;
FIGs. 7A and 7B are views illustrating distributions of light collected by the photodetector when light reflected by an adjacent layer converges during the reproduction of an optical disc with the optical pick-up illustrated in FIG. 2; and
FIG. 8 is a schematic view illustrating a disc apparatus having the optical pick-up according to another embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

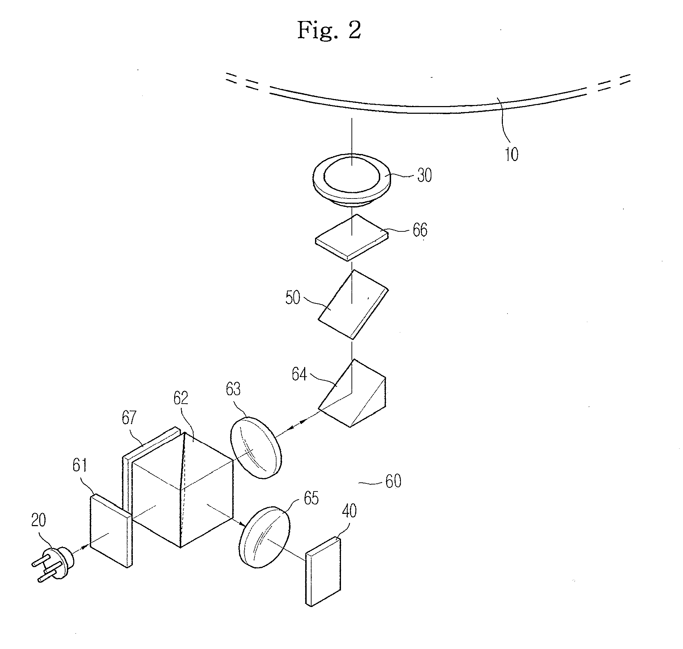

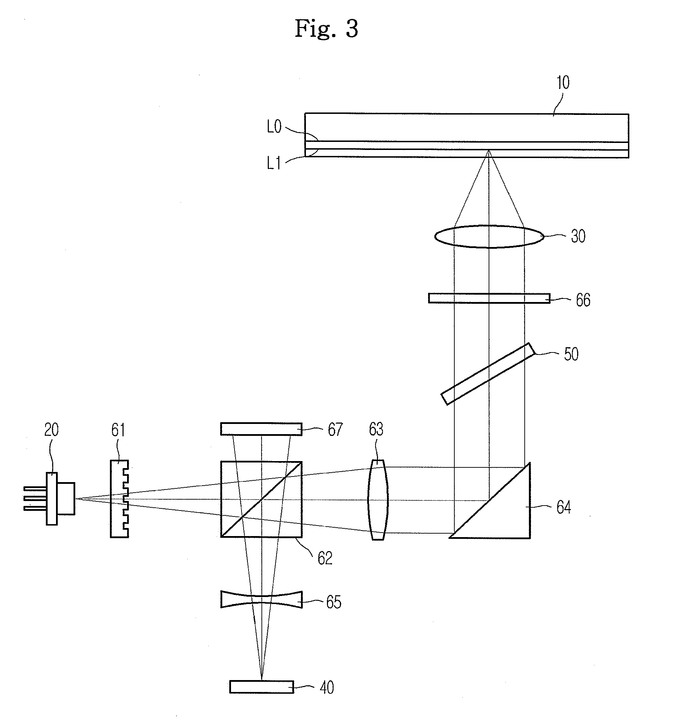

FIG. 2 is a perspective view schematically illustrating an optical system of an optical pick-up according to an embodiment of the present invention, and FIG. 3 is a plan view illustrating an arrangement of the optical pick-up illustrated in FIG. 2. The optical pick-up has an optical architecture using a light path converter and different wavelengths of light to be compatibly applied to various types of optical discs with different recording densities. The optical architecture can be configured in various ways. Generally, the optical pick-up projects a laser beam on a signal recording layer of an optical disc to record data and receives the laser beam reflected by the signal recording layer of the optical disc to reproduce the data recorded in the optical disc in a non-contact manner.

As illustrated in FIGs. 2 and 3, the optical pick-up includes an optical disc 10, a light source 20 to emit a laser beam with a wavelength corresponding to a format of the optical disc 10, an objective lens 30 to focus the light emitted from the light source 20 to form light spots on signal recording layers L0 and L1 of the optical disc 10, a photodetector 40 to detect an information signal and/or an error signal by receiving light that is focused on the optical disc by the objective lens 30 and subsequently reflected by the optical disc 10, an optical member 50 to intercept noise light reflected by an adjacent layer on the optical disc 10 during the reception of light by the photodetector 40, and an optical path converter 60 to change a traveling path of a light beam.

The optical disc 10 may be a BD standard optical disc, or any disc among various types of optical discs using light beams with different wavelengths and having different recording densities. Furthermore, the optical disc 10 has multiple recordable signal recording layers, for example, dual recording layers L0 and L1, and includes a cover glass to protect dual recording layers L0 and L1 and recording signals. Generally, a thickness of the cover glass for a single-layer BD optical disc 10 is 0.1 mm and the recording layers exist within a distance of 0.1 mm from the surface of the cover glass. In the BD dual layer optical disc 10, there are two signal recording layers (such as a layer L1 existing within a distance of 0.075 mm from the surface of the cover glass and a layer L0 existing within a distance of 0.1 mm from the surface of the cover glass).

The light source 20 emits a light beam of a wavelength corresponding to the type of the optical disc 10 (for example, a blue-violet laser having a wavelength of 405 nm satisfying the advance optical disc (AOD) standard and the BD standard).

The objective lens 30 has a numeric aperture NA corresponding to the type of the optical disc 10 (for example, a numerical aperture of about 0.85 satisfying the BD standard). As such, when the light source 20 emits a light beam with a wavelength in the Blu-ray region and the objective lens 30 has a numerical aperture of 0.85, the optical pick-up according to aspects of the present invention can record and/or reproduce the high density optical disc 10 (particularly, the BD standard multilayer optical disc) having a plurality of recording layers L0 and L1 formed on a single side.

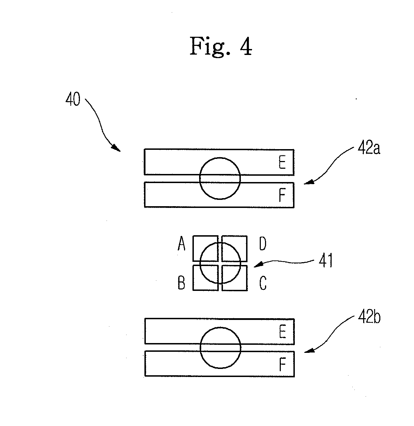

The photodetector 40 is a photodiode to detect an information signal and/or an error signal by receiving the light beam reflected by the optical disc 10. The photodetector 40 will be described later in detail with reference to FIG. 4.

The optical member 50 is positioned so as not to influence the signal light (0th order light) reflected by the layer (a signal recording layer on which data is to be recorded and/or reproduced) positioned at the focal point of the objective lens 30. However, the optical member 50 does considerably change a size of the noise light (0th order light) reflected by the adjacent layers (layers adjacent to the recording and/or reproducing layer) to generate astigmatism. The optical member 50 may include a glass plate or a plastic plate, may have a thickness between 1 mm and 3 mm, and may be obliquely inclined with respect to the horizontal direction by about 40 degrees to 50 degrees.

The optical path converter 60 guides the light emitted from the light source 20 to the objective lens 30 and the light reflected by the optical disc 10 to the photodetector 40. The optical path converter 60 includes a grating 61 to separate the light emitted from the light source 20 into three light beams, a beam splitter 62 to change the traveling path of the light according to the polarized direction of the light beam, a collimating lens 63 to change divergent light passing through the beam splitter 62 into a parallel light beam, a reflective mirror 64 to bend the traveling path of the light, an astigmatism lens 65 to detect a focus error signal using an astigmatism method, and a quarter wave plate 66 to rotate a polarized component of the light entering the objective lens 30 by 90 degrees.

The grating 61 is an optical divisional diffraction element to split the light emitted from the light source 20 into the 0th order (main light) and $\pm$ 1st order lights (sub-lights) such that the tracking error signal is detected in the three beam method or the DPP method. The grating 61 obtains the data reproduction signal from the 0th order detected signal reflected by the optical disc 10 and obtains the tracking error signal from the 0th order light reflected by the optical disc 10 and the $\pm$ 1st order detected signals. The grating 61 may be integrally formed with a half wave plate to rotate the polarizing direction by 180 degrees.

Moreover, the optical path converter 60 further includes a feedback photodiode 67 to control an output of the light emitted from the light source 20.

FIG. 4 is a schematic view illustrating a photodetector employed in the optical pick-up according to an embodiment of the present invention. The photodetector 40 detects the tracking error signal using, for example, the DPP method. Referring to FIG. 4, in a case where the light emitted from the light source 10 is divided into three lights (i.e., the 0th order light (main light) and the $\pm$ 1st order lights (sub-lights)), the photodetector 40 includes a main photodetector 41 to receive the 0th order light reflected by the optical disc 10, and first and second sub-photodetectors 42a and 42b provided at both sides of the main photodetector 41 to respectively receive the ± 1st order lights reflected by the optical disc 10.

The main photodetector 41 may be divided into two parts in a direction corresponding to the radial direction of the optical disc 10 (R-direction) and in a direction corresponding to the tangential direction of the optical disc 10 (T-direction), respectively, such that the focus error signal and the tracking error signal can be detected. In other words, the main photodetector 41 may be divided into two parts in the R-direction and into two parts in the T-direction (i.e., may have a quadruple structure).

The first and second sub-photodetectors 42a and 42b may each be divided into two parts in the R-direction to detect the tracking error signal using the DPP method. As such, when light receiving regions provided in the main photodetector 41 to receive the 0th order light are A, B, C, and D, respectively, and light receiving regions provided in the first and second sub-photodetectors 42a and 42b to receive the ± 1st order lights are E, F, G, and H respectively, the tracking error signal detected by the DPP method is equal to [(A + D) - (B + C)] - k[(E - F) + (G - H)], where k is a coefficient relating to the intensity ratio of the 0th order light and the ± 1st order lights. Thus, k = 10 / (1 + 1) = 5 when the respective intensity ratios are 1:10:1.

The intensity ratio of the 0th order light and the ± 1st order lights is 1:10:1 (i.e., the intensity of the 0th order light is relatively high) because the reproduction signal is obtained from the 0th order light.

Hereinafter, operations of the above-mentioned optical pick-up and the disc apparatus having the same will be described. First, the light emitted from the light source 20 is diffracted by the grating 61 and is divided into three light beams (such as the 0th order light (main light) and the ± 1st order lights (sub-lights)) to detect a tracking error signal. The divided light beams pass through the collimating lens 63 via the beam splitter 62 to be converted into collimated beams, and are reflected by the reflective mirror 64 to the objective lens 30. The collimated beams pass through the quarter wave plate 66 positioned in front of the objective lens 30 and are converted into circular polarized beams. The circular polarized beams pass through the objective lens 30 to form light spots on the signal recording layers L0 and L1 of the optical disc 10.

Then, light beams reflected by the signal recording layer L0 or L1 and the adjacent layer L1 or L0 of the optical disc 10 are received by the photodetector 40 via the beam splitter 61. Accordingly, the main photodetector 41 of the photodetector 40 receives the 0th order light (signal light) reflected by the signal recording layer L0 or L1 and the first and second sub-photodetectors 42a and 42b of the photodetector 40 receive the ± 1st order lights (sub-lights), respectively, reflected by the signal recording layers L0 and L1. In this case, the 0th order light (noise light) reflected by the adjacent layer L1 or L0 is expanded due to a defocus phenomenon to be simultaneously received by the main photodetector 41 and the first and second photodetectos 42a and 42b.

As such, in the case of the dual layer optical disc 10 having two signal recording layers L0 and L1, the light returning to the photodetector 40 during the recording/reproduction of data on one of the layer L1 closer to the light entering surface of the optical disc 10 and the layer L0 farther from the light entering surface is influenced by a layer (the signal recording layer to be recorded/reproduced) where the focal point of the objective lens 30 is positioned as well as the adjacent layers thereof. For example, when data on the layer L1 of the layers L1 and L0, closer to the light entering surface, is reproduced, the 0th order light reflected by the layer L0 to which the light is largely focused reaches the first and second sub-photodetectors 42a and 42b to influence the tracking error signal of the ± 1st order lights reflected by the layer L1. This is because, as described above, the intensity of the 0th order light is much higher than those of the ± 1 st order lights.

Thus, in order to prevent the 0th order light reflected by the adjacent layers from influencing the tracking error signal, according to an aspect of the present invention, the optical member 50 is provided between the objective lens 30 and the collimating lens 63 such that the signal light (0th order light) reflected by the layer (signal recording layer on which data is to be recorded and/or reproduced) positioned at the focal point of the objective lens 30 is not influenced, but the size of the noise light (0th order light) reflected by the adjacent layers is increased to relatively reduce the intensity of noise to be received by the first and second sub-photodetectors 42a and 42b. For example, when data on the layer L1 of the layers L1 and L0 closer to the light entering surface is reproduced, the size of the 0th order light reflected by the layer L0 (noise light) is increased to relatively reduce the intensity of the reflected noise light arriving at the first and second sub-photodetectors 42a and 42b. As a result, the deterioration of the tracking error signal can be prevented.

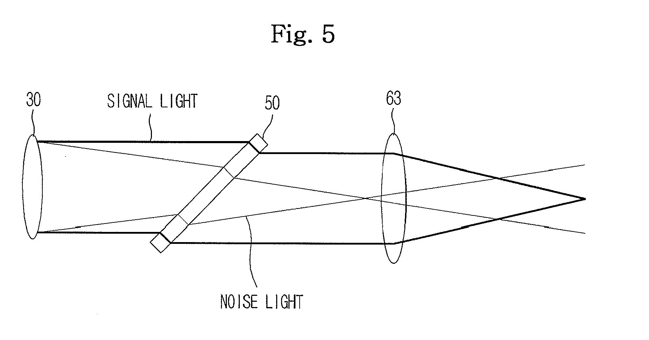

FIG. 5 is an exemplary view illustrating a principle of the optical member 50 employed in the optical pick-up according to the embodiment of the present invention. According to an aspect of the present invention, the optical member 50 changes the size of the noise light (0th order light) reflected by the adjacent layers of the optical disc 10.

Referring to FIG. 5, the optical member 50 is provided between the objective lens 30 and the collimating lens 63. Moreover, the optical member 50 changes the size of the noise light (0th order light) reflected by the adjacent layers (adjacent to the recording and/or reproducing layers) without influencing the signal light (0th order light) reflected by the signal recording layer (to be recorded and/or reproduced) positioned at the focal point of the objective lens 30.

Since the 0th order light (signal light) reflected by the signal recording layer L0 or L1 of the optical disc 10 positioned at the focal point of the objective lens 30 travels parallel, aberrations do not occur when the optical member 50 is inclined by about 40 degrees to 50 degrees, but the optical axis slightly changes in direction as illustrated in FIG. 5.

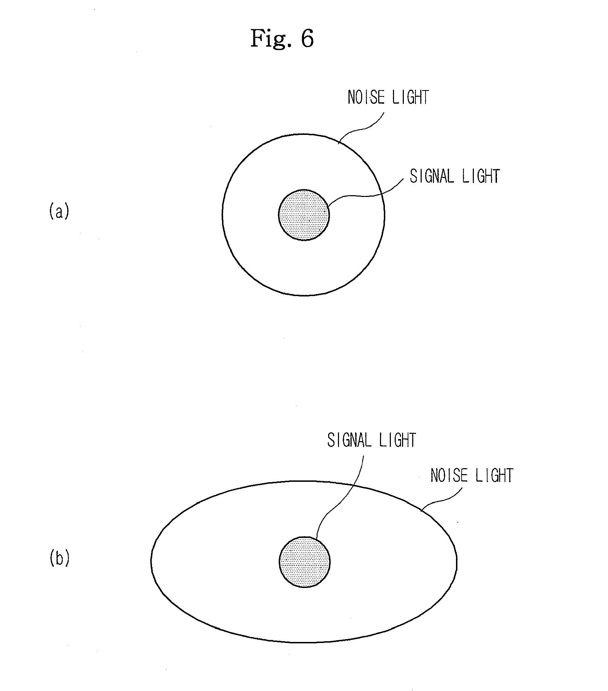

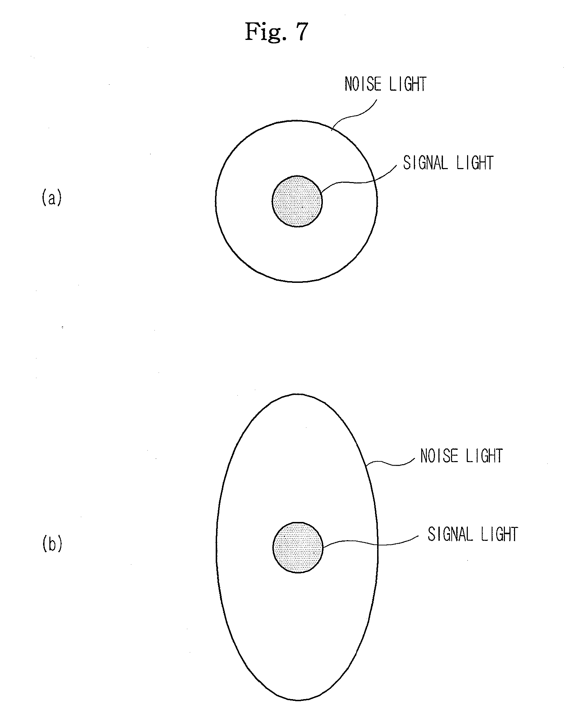

However, since the 0th order light reflected by the adjacent layer L1 or L0 diverges or converges, the 0th order light (noise light) is distorted by the optical member 50 that is inclined by about 40 degrees to 50 degrees and further diverges or converges so that aberrations occur and astigmatism in the generated aberration significantly increases. As already known, astigmatism is a phenomenon of increasing the size of the light in one direction. As illustrated in FIGs. 6 and 7, the lights to be diverged and converged are increased.

FIGs. 6A and 6B are views illustrating distributions of light collected by the photodetector 40 when the light reflected by the adjacent layers diverges during the reproduction of the optical disc 10 with the optical pickup illustrated in FIG. 2.

FIG. 6A illustrates a distribution of light when the signal light reflected by the signal recording layer on the optical disc 10 and the noise light reflected by the adjacent layer on the optical disc 10 are focused as their original types on the photodetector 40 in a case without the astigmatism. FIG. 6B illustrates a distribution when the signal light reflected by the signal recording layer is focused as its original type on the photodetector 40 and the noise light reflected by the adjacent layer is further diverged and is focused as its distorted type on the photodetector 40 in a case of having the astigmatism.

FIGs. 7A and 7B are views illustrating distributions of light collected by the photodetector when the light reflected by the adjacent layer converges during the reproduction of the optical disc 10 with the optical pickup illustrated in FIG. 2.

FIG. 7A illustrates a distribution of light when the signal light reflected by the signal recording layer on the optical disc 10 and the noise light reflected by the adjacent layer on the optical disc 10 are focused as their original types on the photodetector 40 in a case without the astigmatism. FIG. 7B illustrates distribution when the signal light reflected by the signal recording layer is focused as its original type on the photodetector 40 and the noise light reflected by the adjacent layer is further converged and is focused as its distorted type on the photodetector 40 in a case of having the astigmatism.

As such, as the size of the noise light reflected by the adjacent layer increases, the intensities of the 0th order lights to be focused on the first and second sub-photodetectors 42a and 42b are decreased in order to reduce the noise. By doing so, it is possible to solve the problem in the conventional optical pick-up and disc apparatus that a part of the signal lights (0th order lights), reflected by the signal recording layer (for example, the layer L1) and entering the main photodetector 41 of the photodetector 40, is blocked. Furthermore, only the noise lights (0th order lights), reflected by the adjacent layers and focused on the first and second sub-photodetectors 42a and 42b of the photodetector 40, are blocked such that the sizes of the noise lights to arrive at the first and second sub-photodetectors 42a and 42b increase and the intensities decrease to definitely distinguish the noise light (0th order light) from the sub-lights ($\pm$ 1st order lights) reflected by the signal recording layer (for example, the layer L1). As a result, the deterioration of the tracking error signal caused by the coherent noise light due to the adjacent layers is overcome.

Moreover, the optical member 50 may be configured to have a proper thickness and a proper slope suitable for an optical system, wherein the astigmatism and the size of the light increases as an incline and thickness of the optical member 50 increases. Since the divergence and the convergence are used, the optical member 50 may not be adjusted as it is possible to position the optical member 50 at any location between the objective lens 30 and the collimating lens 63.

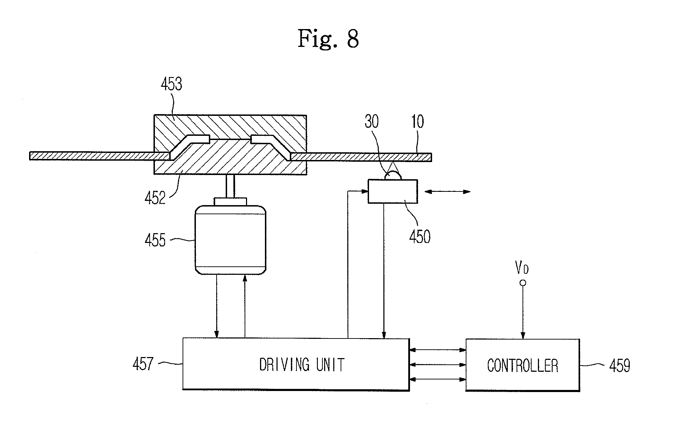

FIG. 8 is a schematic view illustrating a disc apparatus having the optical pick-up according to another embodiment of the present invention. Referring to FIG. 8, the disc apparatus includes a spindle motor 455 to rotate the optical disc 10, an optical pick-up 450 movably installed in the radial direction of the optical disc 10 to perform the reproduction and/or the recording of data on the optical disc 10, a driving unit 457 to drive the spindle motor 455 and the optical pick-up 450, a controller 459 to control the focusing and the tracking servo of the optical pick-up 450, and a clamp 453 to secure the optical disc 10.

The light reflected by the optical disc 10 is detected by the photodetector 40 provided in the optical pick-up 450 and is converted into an electric signal that is input to the controller 459 through the driving unit 457. The driving unit 457 controls the rounds per minute (RPM) of the spindle motor 455, amplifies the inputted signal, and drives the optical pick-up 450. The controller 459 transmits a focus servo and a tracking servo, adjusted based on the signal inputted from the driving unit 457, to the driving unit 457 such that the focusing and the tracking of the optical pick-up 450 are realized.

In the disc apparatus having the optical pick-up 450, when data is recorded and/or reproduced on/from the optical disc 10 having a plurality of signal recording layers L0 and L1, a collimated original signal is passed and only the noise light caused by the adjacent layers is intercepted such that the signal light enters the photodetector 40 as it is. Thus, it is possible to easily prevent the detected tracking error signal from deteriorating.

As described above, according to aspects of the present invention, there is provided an optical pickup and a disc apparatus having the same that increases the size of light reflected by an adjacent layer when recording and/or reproducing a multilayer optical disc so that the deterioration of the tracking error signal caused by the adjacent layer can be effectively prevented. An optical member that increases the size of the light is provided between an objective lens and a collimating lens to generate astigmatism to intercept the noise light reflected by the adjacent layers. Accordingly, interlayer signal coherence of the multilayer optical disc is eliminated and the deterioration of the RF signal characteristic can be effectively minimized. Although a few embodiments of the present invention have been shown and described, it would be appreciated by those skilled in the art that changes may be made in this embodiment without departing from the principles of the invention, the scope of which is defined in the claims.

**Claims**

1. An optical member for an optical pick-up that records and/or reproduces data to/from a target recording layer of an optical disc having a plurality of recording layers, wherein:

    the optical member is arranged to intercept a noise light reflected by a layer of the optical disc adjacent to the target recording layer in order to decrease an intensity of the noise light.

2. The optical member as claimed in claim 1, wherein the optical member is arranged to intercept the noise light reflected by the adjacent layer of the optical disc without blocking a signal light reflected by the target recording layer.

3. An optical pick-up comprising the optical member of claim 1 or 2.

4. The optical pick-up as claimed in claim 3, wherein the optical pick-up is arranged to detect a signal from the signal light.

5. The optical member as claimed in claim 4, wherein the signal is a tracking error signal and/or a data reproduction signal.

6. The optical pick-up as claimed in claim 4 or 5, further comprising:

    a photodetector for receiving a signal light reflected by the target recording layer of the optical disc and a noise light reflected by an adjacent recording layer of the optical disc, and for generating the signal from the signal light.

7. The optical pick-up as claimed in claim 6, further comprising:

    a light source for emitting a light with a wavelength corresponding to an optical disc type;
    a light collecting unit for focusing the light emitted from the light source to form a light spot on a target recording layer of the optical disc.

8. The optical pick-up as claimed in claim 7, wherein the optical disc is a Blu-ray disc and the light source emits a light with a wavelength satisfying a Blu-ray optical disc standard.

9. The optical pick-up as claimed in claim 7 or 8, wherein the light collecting unit comprises an objective lens having a numerical aperture of about 0.85.

10. The optical pick-up as claimed in any one of claims 7 to 9, further comprising:

    an optical path converter to guide the light emitted from the light source to the light collecting unit, and to guide the signal light to the photodetector, wherein the optical member is provided between the optical path converter and the light collecting unit.

11. The optical pick-up as claimed in claim 10, wherein:

    the optical path converter comprises a collimating lens to collimate the light emitted from the light source; and
    the optical member is provided between the collimating lens and the light collecting unit.

12. The optical pick-up as claimed in any one of claims 6 to 11, wherein the signal light comprises a $0^{th}$ order signal light and $\pm$ 1st order signal lights and the noise light comprises a $0^{th}$ order noise light, wherein:

    the photodetector comprises a main photodetector to receive the $0^{th}$ order signal light and a first sub-photodetector and a second sub-photodetector to respectively receive the $\pm$ 1st order signal lights; and
    the optical member increases a size of the $0^{th}$ order noise light to decrease an intensity of the $0^{th}$ order noise light received by the first sub-photodetector and the second sub-photodetector.

13. The optical pick-up as claimed in claim 12, further comprising a grating to divide the light emitted from the light source into a $0^{th}$ order light and $\pm$ 1st order lights to be projected onto the optical disc.

14. The optical pick-up as claimed in any one of claim 3 to 13, wherein the optical member comprises a plate made of glass and/or plastic to transmit the signal light and to diffuse the noise light to be diverged and converged to generate an aberration.

15. The optical pick-up as claimed in claim 14, wherein the plate has a thickness between about 1 mm and about 3 mm.

**16.** The optical pick-up as claimed in claim 14 or 15, wherein the plate is inclined with respect to a line that runs perpendicular to a path of the signal light to the optical member by about 40 degrees to 50 degrees.

**17.** The optical pick-up as claimed in any one of claims 3 to 16, wherein the optical member increases a size of the noise light reflected by the adjacent recording layer such that the intensity of the noise light is less than an intensity of the signal light.

**18.** The optical pick-up as claimed in any one of claims 3 to 17, wherein the target recording layer is a layer on which the data is to be recorded and/or reproduced.

**19.** A disc apparatus comprising:

an optical pick-up according to any one of claims 3 to 18 for recording and/or reproducing data to/from a target recording layer of an optical disc having a plurality of recording layers; a driving unit to drive the optical pick-up; and a controller to control a focus servo and a tracking servo of the optical pick-up.

**20.** A method of detecting a signal from a target recording layer of an optical disc having a plurality of recording layers, the method comprising:

emitting a light with a wavelength corresponding to a type of the optical disc; focusing the emitted light on the target recording layer of the optical disc; intercepting a noise light reflected by an adjacent recording layer of the optical disc without blocking a signal light reflected by the target recording layer, and decreasing an intensity of the intercepted noise light; receiving the noise light having the decreased intensity and the signal light; and detecting the signal from the received signal light without interference from the received noise light.

**21.** The method as claimed in claim 22, wherein:

the signal light comprises a $0^{th}$ order signal light and $\pm$ 1st order signal lights and the noise light comprises a $0^{th}$ order noise light; the intercepting of the noise light comprises increasing a size of the $0^{th}$ order noise light to decrease an intensity of the $0^{th}$ order noise light; and the receiving of the noise light and the signal light comprises receiving the $0^{th}$ order signal light, the $\pm$ 1st order signal lights, and the $0^{th}$ order noise light.

# Fig. 1

L0
L1    L0
      L1

L10

L01

L00 OR L11

1

Fig. 2

Fig. 3

Fig. 4

EP 1 959 441 A1

Fig. 5

30    SIGNAL LIGHT    50          63

NOISE LIGHT

14

Fig. 6

(a)

NOISE LIGHT

SIGNAL LIGHT

(b)

SIGNAL LIGHT

NOISE LIGHT

Fig. 7

(a)

NOISE LIGHT

SIGNAL LIGHT

(b)

NOISE LIGHT

SIGNAL LIGHT

Fig. 8

453
452
30
10
455
450
Vo
457
DRIVING UNIT
CONTROLLER
459

European Patent
Office

**EUROPEAN SEARCH REPORT**

Application Number

EP 07 12 3568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 08 185640 A (SONY CORP) 16 July 1996 (1996-07-16) * figure 1 * * abstract * | 1-9, 18-20 | INV. G11B7/135 G11B7/16 |
| A | | 10-17,21 | ADD. G11B7/00 |
| X | US 6 992 965 B1 (GLUSHKO BORIS [IL] ET AL) 31 January 2006 (2006-01-31) * column 8, line 54 - column 9, line 3 * * figures 2A,4A * | 1,3-11, 18-20 | G11B7/09 |
| A | | 2,12-17, 21 | |
| X | US 2006/193236 A1 (WATABE KAZUO [JP] ET AL) 31 August 2006 (2006-08-31) * paragraph [0059] - paragraph [0062] * * paragraph [0083] - paragraph [0089] * * figures 1,2,4-6,8 * | 1,3-9, 18-20 | |
| A | | 2,10-17, 21 | |
| | | | TECHNICAL FIELDS SEARCHED (IPC) |
| E | US 2008/019254 A1 (MORI KAZUSHI [JP] ET AL) 24 January 2008 (2008-01-24) * the whole document * | 1-21 | G11B |

The present search report has been drawn up for all claims

| Place of search | Date of completion of the search | Examiner |
|---|---|---|
| The Hague | 4 April 2008 | Cornelussen, Ronald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 12 3568

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2008

| Patent document cited in search report | | Publication date | Patent family member(s) | | Publication date |
|---|---|---|---|---|---|
| JP 8185640 | A | 16-07-1996 | NONE | | |
| US 6992965 | B1 | 31-01-2006 | NONE | | |
| US 2006193236 | A1 | 31-08-2006 | JP 2006244535 A | | 14-09-2006 |
| US 2008019254 | A1 | 24-01-2008 | CN 101110236 A | | 23-01-2008 |
| | | | JP 2008027507 A | | 07-02-2008 |

EPO FORM P0459

For more details about this annex : see Official Journal of the European Patent Office, No. 12/82

**REFERENCES CITED IN THE DESCRIPTION**

**Patent documents cited in the description**

• KR 20050074839